# EUROPEAN PATENT SPECIFICATION

(11) **EP 3 627 713 B1**
(45) Date of publication and mention of the grant of the patent: **28.12.2022**
(21) Application number: 19198743.7
(22) Date of filing: 20.09.2019
(51) Int. Cl.: H04B 1/00, H01Q 1/38

(54) **METHOD AND APPARATUS**
VERFAHREN UND VORRICHTUNG
PROCÉDÉ ET APPAREIL

(30) Priority: 20.09.2018 GB 201815362; 01.08.2019 GB 201911016
(43) Date of publication of application: 25.03.2020
(73) Proprietor: Swisscom AG, 3050 Bern (CH)
(72) Inventor: JAMALY, Nima, 3050 Bern (CH)
(74) Representative: Leach, Sean Adam

(56) References cited:
- JP-A- 2014 078 772
- US-A1- 2004 135 726
- US-A1- 2008 048 867
- PENAFIEL-OJEDA CARLOS RAMIRO ET AL: "Design of a low profile unidirectional UWB antenna for multi-service base station", 2017 11TH EUROPEAN CONFERENCE ON ANTENNAS AND PROPAGATION (EUCAP), EURAAP, 19 March 2017 (2017-03-19), pages 3575-3579, XP033097458, DOI: 10.23919/EUCAP.2017.7928382

## Description

### Field of Invention

The present invention relates to methods and apparatus, and more particularly to antennas and methods of operating antennas such as multiple input multiple output, MIMO, antennas for radio telecommunications.

### Background

Ultra-wideband (also known as UWB, ultra-wide band and ultraband) is a radio technology that can use a very low energy level for short-range, high-bandwidth communications over a large portion of the radio spectrum. Typically UWB communications transmit information spread over a bandwidth of 500MHz or more. For example, the International Telecommunication Union Radiocommunication Sector (ITU-R) define UWB as an antenna transmission for which emitted signal bandwidth exceeds the lesser of 500 MHz or 20% of the arithmetic center frequency.

Bandwidth and time resolution are inherently related - the upper limit on the pulse rate of a communication method is set by the communication bandwidth. Thus, UWB systems may enable more accurate use of techniques such as pulse-position or time modulation. Information can also be modulated on UWB signals (pulses) by encoding the polarity of the pulse, its amplitude and/or by using orthogonal pulses.

Low profile unidirectional UWB antennas have been proposed for use in base stations of a telecommunications network by Peñafiel-Ojeda *et al.* (C. R. Peñafiel-Ojeda, M. Cabedo-Fabrés, N. M. Mohamed-Hicho and M. Ferrando-Bataller, "Design of a low profile unidirectional UWB antenna for multi-service base station," 2017 11th European Conference on Antennas and Propagation (EUCAP), Paris, 2017, pp. 3575-3579). Their proposed design is based on exciting the fundamental characteristic mode of a planar structure composed of a metallic ring, applying the Theory of Characteristics Modes. The feeding structure used to excite that mode is asymmetric and it is implemented with two CPW-ports (Coplanar Waveguide) with an impedance of 50 Ohm, that bifurcate into two transmission lines with different lengths that are coupled to a circular aperture using the slot line model. They suggest that such an antenna, with a unidirectional radiation pattern, can be used in services such as UMTS, LTE, WIMAX, WiFi, Bluetooth, etc.

Other antennas are discussed in:
- B. P. Chacko, G. Augustin and T. A. Denidni, "Uniplanar UWB antenna for diversity applications," Proceedings of the 2012 IEEE International Symposium on Antennas and Propagation, Chicago, IL, 2012, pp. 1-2.
- B. P. Chacko, G. Augustin and T. A. Denidni, "Uniplanar Slot Antenna for Ultrawideband Polarization-Diversity Applications," in IEEE Antennas and Wireless Propagation Letters, vol. 12, pp. 88-91, 2013.
- B. P. Chacko, G. Augustin and T. A. Denidni, "Uniplanar polarisation diversity antenna for ultrawideband systems," in IET Microwaves, Antennas & Propagation, vol. 7, no. 10, pp. 851-857, July 16 2013.

### Summary

The invention is set out in the appended claims.

### Brief Description of Drawings

Embodiments of the disclosure will now be described with reference to the accompanying drawings, in which:
Figure 1 shows a plan view and an end view of an antenna;
Figures 2A-C show examples of an antennas comprising a decoupling stub;
Figure 3 shows an example antenna and electrical connectors;
Figures 4A-B show two arrangements of a multiple input multiple output communications apparatus comprising an antenna such as that illustrated in Figure 3;
Figure 5 shows an example plot of an S-parameter of the antenna illustrated in Figure 1;
Figure 6 shows a plot of an S-parameter of the antenna illustrated in Figure 2A;
Figure 7 shows a plot of an S-parameter of the antenna such illustrated in Figure 2B;
Figure 8 shows a plot of the S-parameters of the antenna illustrated in Figure 3.

In the drawings like reference numerals are used to indicate like elements.

### Specific Description

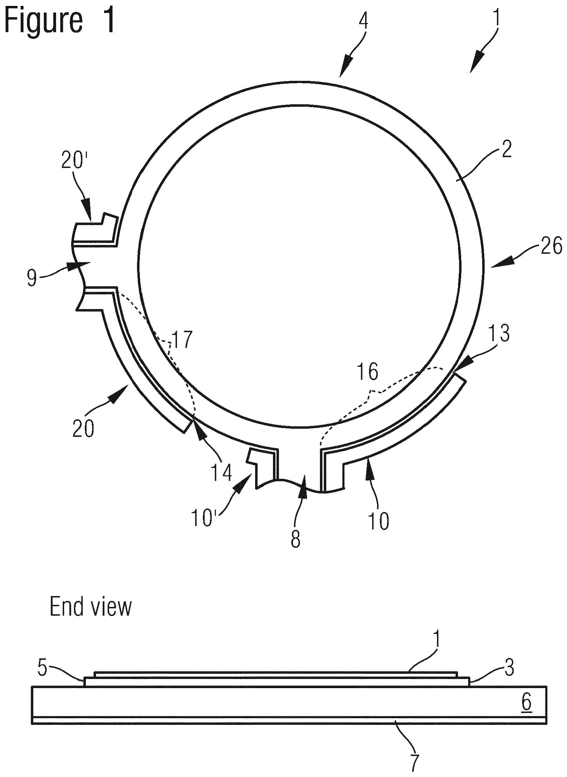

Figure 1 shows an antenna 1 disposed on the surface 5 of a flat dielectric substrate 3. In the example shown in Figure 1, the substrate 3 comprises a dielectric having a relative permittivity of between about 3.2 and 3.6. The substrate 3 may be 0.8mm thick, or between about 0.5 mm and 1.5 mm. Typically, the substrate is square and 50mm wide, but other sizes and shapes may be used.

The antenna 1 is provided by an arrangement of laminar conductors 4, 10, 10', 20, 20' disposed on the surface 5 of the substrate 3. The antenna 1 comprises an annular land 4, a first land 10, 10' and a second land 20, 20'.

The annular land 4 illustrated in Figure 1 comprises a circular annulus 2 provided by a circular track of conductive material disposed on the surface 5 of the substrate 3. The annulus 2 may have a radius of about 23mm measured from the centre of that circle to the middle of the track's width, and the track may have a width of about 3mm (e.g. it has an inner radius (the distance from its of about 21.5mm, and an outer radius of about 24.5mm). Other dimensions may be used. The laminar conductor which makes up these lands 2, 10, 10', 20, 20', may comprise copper and may be about 35 µm thick.

The annular land 4 also comprises a first stem 8 and a second stem 9. The stems each extend radially out from an outward edge 26 of the annulus. The first stem 8 of the annular land is spaced from the second stem 9 of the annular land by about ¼ the circumference of the annulus 2, e.g. the angular separation of the second stem 9 of the annular land and the first stem 8 of the annular land (subtended at the centre of the annulus) may be about 90°.

The first land 10, 10' illustrated in Figure 1 comprises two substantially L-shaped parts. These two L-shaped parts are different sizes, and lie on either side of the first stem 8 of the annular land. The larger of the two L-shaped parts 10 lies on the far side of the first stem 8 from the second stem 9. The 'back' of this L-shaped part is arc shaped, whereas the 'base' of this L-shaped part is straight. The arc shaped back of the 'L' lies alongside the radially outward edge 26 of the annulus 2 adjacent the first stem 8 of the annular land. The edge of this arc shaped part that is adjacent to the annular land 4 is parallel to a first portion 16 of the radially outward edge 26 of the annulus 2. The bottom edge of the base of the 'L' may run parallel to the edge of the first stem 8 of the annular land 4. The spacing between the L-shape and the annular land may be even along the length of these edges. The smaller of the two L-shaped parts 10' lies on the other side of the stem 8 from the larger one (e.g. on the side nearest to second stem 9). The 'back' of this smaller L-shaped part is straight and lies alongside the first stem 8 whilst the 'base' of this smaller L-shaped part may be arc shaped and lies alongside the radially outward edge 26 of the annulus 2, for a short part of that edge between the first stem 8 and the second stem 9.

The second land 20, 20' illustrated in Figure 1 may be the same shape as the first land 10, 10'. For example, the second land 20, 20' may comprise two substantially L-shaped parts. These two L-shaped parts 20, 20' are different sizes, and lie on either side of the second stem 9 of the annular land 4. The larger of the two L-shaped parts 20 lies on the near side of the second stem 9 (e.g. nearest to the first stem 8). The 'back' of this L-shaped part 20 is arc shaped, whereas the 'base' of this L-shaped part 20 is straight. The arc shaped back of the 'L' lies alongside the radially outward edge 26 of the annular land adjacent the second stem 9 of the annulus 2. The edge of this arc shaped part that is adjacent to the annular land is parallel to the radially outward edge 26 of the annulus 2 (e.g. along a second portion 17 of the outward edge 26 between the first stem 8 and the second stem 9). The bottom straight edge of the base of the 'L' may run parallel to the edge of the second stem 9 of the annular land along at least a part of its length. The spacing between the L-shape and the annular land may be even along the length of these edges. The smaller of the two L-shaped parts 20' lies on the other side of the second stem 9 from the larger one (e.g. on the side farthest from first stem 8). The 'back' of this smaller L-shaped part is straight and lies alongside the second stem 9 of the annular land whilst the 'base' of this smaller L-shaped part may be arc shaped and lies alongside the radially outward edge 26 of the annular land, for a short part of that edge from second stem 8.

The length of the arc shaped portions of the larger L-shaped parts of the first and second lands 10, 20, are selected based on the operating frequency of the antenna. For instance, the arc shaped portions 10, 20 may be around 25 mm long, and this may provide a resonance frequency at 3GHz (25 mm is a quarter wavelength). The length of the arc shaped portions 10, 20 may be changed if there is a wish to vary this frequency.

It will be appreciated in the context of the present disclosure that the radius of the ring may be chosen based on the desired operating frequency range of the antenna 1. For an operating frequency band of around 3GHz, the radius of the annulus 2 (main ring radius may be about 23 mm measured from the centre of the ring, to the middle of the conductive track which makes it up). The width of the ring may be about around 3 mm. This means the inner radius of the ring in Fig. 1 (23) would be 21.5 mm.

To provide one port of the antenna, a first slot 13 is formed by the space between the curved edge of the first conductive land 10 and the first portion 16 of the curved outward edge 26 of the annulus adjacent to that curved edge. This slot 13 can act as a wave guide. An RF signal can be applied to the first conductive land 10, 10' or to the part of the annular land 4 which lies alongside the first conductive land 10, 10' (e.g. the first portion 16 or the first stem 8) to excite this slot 13 and drive a first polarisation mode of the fundamental frequency of the antenna 1.

To provide a second port of the antenna, a second slot 14 is formed by the space between the curved edge of the second conductive land 20 and the second portion 17 of the outward edge 26 of the annulus adjacent to that curved edge. This slot 14 can act as a second wave guide. Thus, an RF signal can be applied to the second conductive land 20, 20' or to the part of the annulus which lies alongside the curved edge of the second conductive land 20, (e.g. the second portion 17 or the second stem 9) to excite this slot and drive a second polarisation mode of the fundamental frequency of the antenna 1. The first polarisation mode and the second polarisation mode may be orthogonal to each other.

A ground plane conductor 7 is also shown in Figure 1, this ground plane conductor is on the other side of the substrate 3 from the antenna 1, and may be separated from the substrate 3 by a further dielectric 6. This further dielectric 6 may comprise an air gap, and may comprise a spacer material such as foam. The further dielectric 6 may have a relative permittivity of 1. The spacing between the first surface 5 of the substrate 3 and the ground plane 7 may be about 1.5cm. This may enable the antenna 1 to provide a unidirectional radiation pattern. A smaller spacing may be used for example if the further dielectric has a permittivity greater than 1. The whole antenna 1 apparatus, including this further dielectric 6 and a ground plane (e.g. a so-called PEC ground plane) may be provided within a box, or any other type of encapsulation. This encapsulation may be adapted to enable the apparatus to be secured to a window pane of a domestic dwelling, a commercial premises, or other buildings. In some embodiments, the further dielectric 6 may be provided by the window pane. In these embodiments, the back side of the substrate 3 may be fixed (e.g. by adhesive) to one side of the window pane, and the ground plane conductor may be provided by a conductive mesh disposed on the other side of the window pane. Where a ground plane conductor is provided (with or without the further dielectric) the two slots described above can act as a so-called 'conductor backed' coplanar waveguide. The spacing between the antenna 1 and the ground plane conductor 7 may vary, and the antenna 1 may need to be retuned based on the spacing and on the permittivity of the further dielectric 6. For example retuning may include altering the radius of the antenna and/or the lengths of the first and second lands 10, 10', 20, 20'.

The first slot 13 (formed by the first conductive land 10), and the second slot 14 (formed by the second conductive land 20), may be arranged transverse to one another. For example the slot 13 may be orthogonal to the slot 14 on the surface of the substrate 3. For example, the angular separation between their respective centres may be 90°. The slots themselves 13, 14, are curved and need not be orthogonal in a precise geometric sense, provided that they excite mutually orthogonal modes of the antenna's fundamental frequency. The feed of each slot (e.g. its connection to a transmit/receive signal) may be separated from the feed of the other slot by 90° about the circumference of the antenna 1.

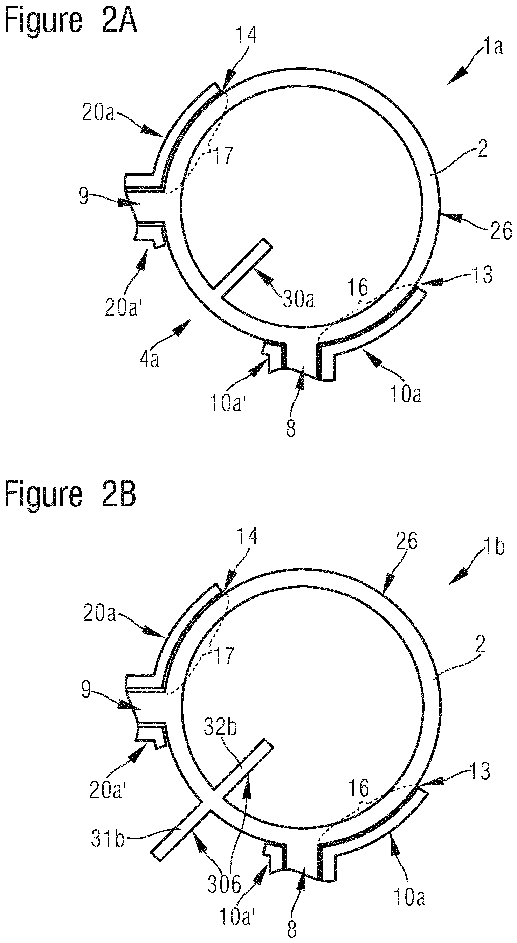

Figure 2A shows a plan view of another example of an antenna 1a such as that described above with reference to Figure 1. The antenna 1a comprises an annular land, first land 10a, 10a' and second land 20a, 20a' arranged similarly as described above with reference to Figure 1, other than in that the position of the two parts of the second land 20a, 20a' relative to the second stem 9 may be reversed. For example, the larger L-shaped part 20a of the second land lies on the far side of the second stem 9, e.g. the smaller part 20a' of the second land lies adjacent a second portion 17 of the outward edge of the annulus 2a between the first stem 8a and the second stem 9a. The smaller L-shaped part 20a' of the second land lies on the near side of the second stem 9 from the first stem 8a, adjacent to an outward edge of the annulus 2.

In addition to this difference, the annular land 4a further comprises a stub 30a, which may act to decouple the first stem 8 from the second stem 9. The stub 30a may comprise a laminar conductor which may lie flat on the surface 5 of the substrate 3. The stub 30a has a first end connected to an inward edge of the annulus 2, and a second end towards the centre of the region of the surface 5 surrounded by the annulus 2. The stub 30a may be straight and aligned radially in the plane of the annulus 2 from the first end to the second end. The stub 30 is connected to the annulus 2 at a position between the first stem 8a and the second stem 9, for example equidistant between the first stem 8a and the second stem 9 such that the angle between the stub 30a and the first stem 8 is 45° and the angle between the stub 30a and the second stem 9 is 45°. The longitudinal axis of the stub 30a defines an axis of symmetry of the antenna 1. The stub 30a may be substantially rectangular. The width of the stub may be slightly less than the width of the annulus 2.

Figure 2B shows a plan view of another example antenna 1b such as that described above with reference to Figure 2A. The antenna 1b is the same as that described with reference to Figure 2A other than in that the stub 30b of the antenna 1b has a first part 32b, and a second part 31b. The first part 32b is connected to the inward edge of the annulus 2 and extends from there toward the centre of the annulus 2. The second part 31b is connected to the outward edge of the annulus 2 and extends from there radially outward from the annulus 2. The stub 30b extending both radially inwards towards the centre of the annulus and outwards away from the annulus may improve decoupling between two ports of the antenna such that the operating bandwidth of the antenna is widened. This may also increase the degree of freedom for tuning the antenna at different operating bands.

The first part 31b and the second part 32b may be connected to opposite edges of the same part of the annulus 2, for example they may both be disposed at the same angular position around its circumference. In this configuration, the stub 30b extends from a first end at the radially outward edge of the first part 31b to a second end at the radially inward edge of the second part 32b. The stub 30b may comprise a track of conductive material on the substrate from the first end to the second end, connected to the annulus between the two ends. It may be straight, for example, the stub 30b may be rectangular. The first part 31b and the second part 32b may be the same radial length as each other, and may be the same width as each other.

The stub 30b may also be equidistant between the first stem 8 and the second stem 9 such that the angle between the stub 30b and the first stem 8 is 45° and the angle between the stub 30b and the second stem 9 is 45°.

The stub 30b may be disposed on an axis of symmetry of the antenna 1b, for example the disposition of the conductive material on the surface 5 of the substrate 3 may be symmetric about a centre line of the stub 30b.

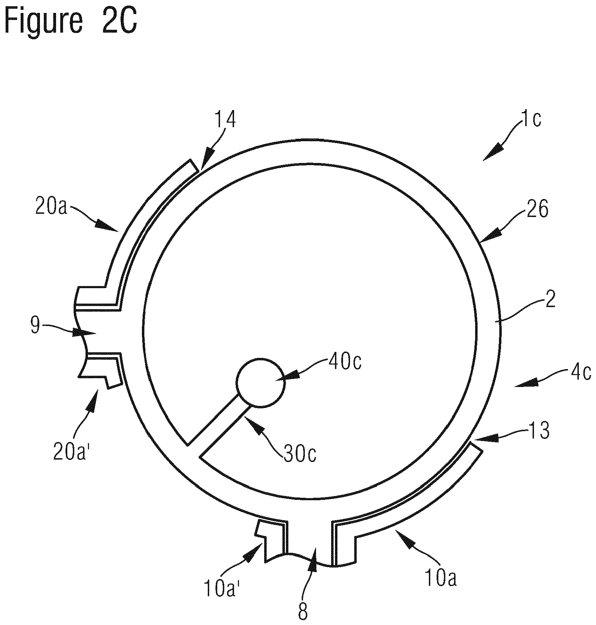

Figure 2C shows a plan view of another example of an antenna 1c such as that described above with reference to Figure 2A. The antenna 1c is the same as the antenna described with reference to Figure 2A other than in that the antenna 1c comprises a circular conductive element 40c at the radially inward end of the stub 30c.

In particular, the antenna 1c comprises a stub 30c that extends radially towards the centre of the annulus 2 from a first end connected to the inward edge of the annulus 2, to a second end inside the annulus 2c. The second end of the stub 30c is connected to the circular element 40c. The circular element 40c comprises a laminar conductor disposed on the surface 5 of the substrate 3. The circular element 40c has a diameter greater than the width of the stub 30c. In some examples the circular element 40c is provided by the same laminar element as the stub 30c, for example the stub 30b may comprise the circular element at its second end.

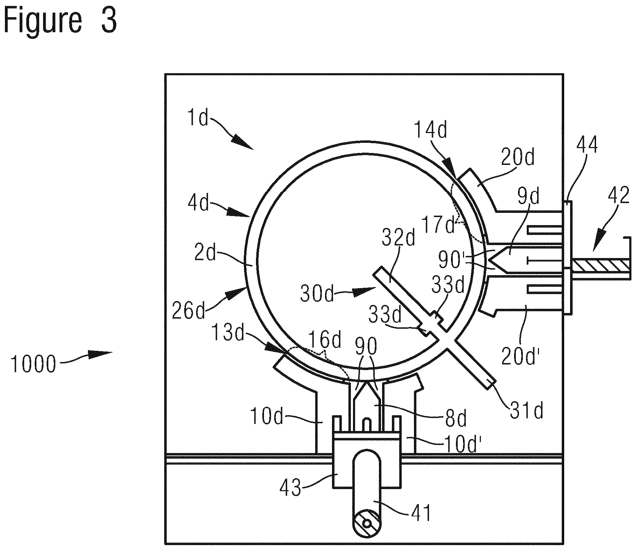

Figure 3 shows an apparatus 1000 comprising another example of an antenna 1d such as any one of those described with reference to Figure 1 to Figure 2C. The apparatus 1000 shown in Figure 3 also comprises a first signal connection 41, 43, and a second signal connection 42, 44.

The antenna 1d illustrated in Figure 3 comprises an annular land 4d, a first land 10d, 10d', and a second land 20d, 20d'. The annular land 4d comprises an annulus 2d and the first land 10d, 10d' and second land are arranged adjacent to an outward edge of the annulus 2d as with the antennas described with reference to Figure 2A to Figure 2C. The annular land 4d further comprises a first stem 8d and a second stem 9d, both connected to the outward edge of the annulus 2d. The first signal connection 41, 43 is connected to apply a first signal voltage between the first stem 8d and the first land 10d, 10d'. The second signal connection 42, 44 is connected to apply a second signal voltage between the second stem 9d and the second land 20d, 20d'. These signal connections 41, 42, 43, 44, may be connected to the stems 8d, 9d, and lands 10d, 10d', 20d, 20d' toward their radially outward ends (e.g. away from the annulus).

The first stem 8d lies on the surface 5 of the substrate 3 in a gap between the first part 10d and the second part 10d' of the first land. Likewise, second stem 9d lies on the surface 5 of the substrate 3 in a gap between the first part 20d and the second part 20d' of the second land. In both cases, the edges of the stems 8d, 9d, and lands 10d, 10d', 20d, 20d' are spaced apart on the substrate 3 to provide a slot between stem 8d, 9d, and land 10d, 10d', 20d, 20d' on either side of each stem.

In particular, the first stem 8d comprises a first portion with straight edges parallel with the adjacent straight edges of the first land (10d, 10d'). The first stem 8d also comprises a tapered portion connected between the first portion and the annulus, and tapered so that it gets narrower towards the annulus 2d (e.g. the spacing between the edges of the first stem 8d and the adjacent edges of the first land 10d, 10d' gets wider closer to the annulus 2d. The second stem 9d is the same in that it also comprises a first portion and a tapered portion to provide the same shaped slot between the second stem 9d and the second land 20d, 20d'.

The first and second stems 8d, 9d thus each provide a transition in width tapers from the width of the stem to a reduced width at the edge of the annulus 2d. The spacing between the first land 10d, 10d' and the first stem 8d as well as that between the second land 20d, 20d' and the second stem 9d is thereby larger closer to the annulus 2d. For example the spacing between each of the L-shaped parts 10d, 10d', 20d, 20d' and the respective first and second stems 8d, 9d may increase to almost half the width of the gap between the larger 10d, 20d, and smaller 10d', 20d' parts of the first and second lands at the point at which the stems 8d, 9d, connect to the annulus 2d. Two sets of two substantially triangular shaped gaps 90, 90' are thereby formed in the regions where each of the stems 8d, 9d, connects to the annulus 2d. The edges of the triangles 90, 90' are defined by the annulus 2d, the stem and each of the L shaped parts adjacent to the stem.

The tapering of the feed point transition portion of the first and second stems 8d, 9d may assist in resolving problems relating to impedance matching. Narrowing the stems 8d, 9d in this region may assist with capacitance-inductance tuning of the antenna 1d.

A first slot 13d is formed by the space between the curved edge of the first conductive land 10d and the first portion 16d of the outward edge 26d of the curved annulus adjacent to that curved edge. This slot 13d can act as a wave guide. An RF signal can be applied to the first conductive land 10d, 10d' or to the part of the annulus 2d which lies alongside the curved edge of the first conductive land 10d, 10d' to excite this slot 13d and drive a first polarisation mode of the fundamental frequency of the antenna 1d.

A second slot 14d is formed by the space between the curved edge of the second conductive land 20d and the second portion 17d of the outward edge 26d of the annulus adjacent to that curved edge. This slot 14d can act as a second wave guide. Thus, an RF signal can be applied to the second conductive land 20d, 20d' or to the part of the annulus which lies alongside the curved edge of the second conductive land 20d, to excite this slot and drive a second polarisation mode of the fundamental frequency of the antenna 1d. The first polarisation mode and the second polarisation mode may be orthogonal to each other. Optionally, to achieve this, the first stem 8d of the annular land 4d may be spaced from the second stem 9d of the annular land 4d by about ¼ the circumference of the annulus 2d, e.g. the angular separation of the second stem 9d of the annular land 4d and the first stem 8d of the annular land 4d (subtended at the centre of the annulus) may be about 90°.

The first slot 13d (formed by the first conductive land 10d), and the second slot 14d (formed by the second conductive land 20d), may be arranged transverse to one another. For example the slot 13d may be orthogonal to the slot 14d on the surface of a substrate 3d. For example, the angular separation between their respective centres may be 90°. The slots themselves 13d, 14d, are curved and need not be orthogonal in a precise geometric sense. The feed of each slot (e.g. its connection to a transmit/receive signal) may be separated from the feed of the other slot by 90° about the circumference of the antenna 1d.

The antenna 1d further comprises another decoupling stub 30d such as is described above with reference to Figures 2A-C. The stub 30d comprises a first part 31d connected to the outward edge of the annulus 2d. It also comprises a second part 32d connected to the inward edge of the annulus 2d. The stub 30d may be straight, and may extend in a radial direction from its first end outside the annulus 2d towards its second end nearer to the centre of the annulus 2b. The stub 30d may be substantially rectangular and may have other features of the stubs described above.

Unlike the antennas described above with reference to Figures 2A-C, the stub 30d further comprises two rectangular protuberances 33d, 33d' on the second part 32d of the stub 32d. The protuberances 33d, 33d' may extend from opposite sides of the second part 32d of the stub 30d. As a result, the second part 32d of the stub 30d may be cross-shaped. The protuberances 33d, 33d' may have a length less than half the length of the second part of the stub 32d, and may be positioned closer to the point at which the second part of the stub 32d connects to the annulus 2d than to the second end of the stub 30d inside the annulus 2d.

The first signal connection may be provided by a first cable 41 electrically connected to the first land 10d, 10d' and to the first stem 8d via a first connector 43. The second signal connection may be provided by a second cable 42 electrically coupled to the second land 20d, 20d' and the second stem 9d via a second connector 44. The first and second cables 41, 42 may be coaxial cables each comprising an inner conductor and an outer conductor, such as a braid.

The inner conductor may be connected to the stem 8d, 9d and the outer conductor may be connected to the first/second land 10d, 10d', 20d, 20d', or vice versa.

An RF signal can be applied from the first and second cables 41, 42 to the annular land 4d and the first 10d, 10d' and second 20d, 20d' lands respectively to drive the antenna 1d.

Application of an RF signal is further described below with reference to the antenna 1d of Figure 3. However, it will be appreciated in the context of the present disclosure that the antennas 1, 1a, 1b, 1c, described above with reference to Figures 1 and 2A-C may also be electrically connected to a cable as described with reference to Figure 3.

An RF signal can be applied to the first conductive land 10d, 10d' or to the annulus adjacent the first conductive land (e.g. via the first stem), to excite the first slot 13d and drive one polarisation mode of the antenna 1d of any of the above described examples. Likewise, an RF signal can be applied to the second conductive land 20d, 20d', or to the annulus adjacent the second conductive land (e.g. via the second stem), to excite the second slot 14d and drive a second polarisation mode of the antenna 1d (orthogonal to the first polarisation mode) of any of the above described examples. The first and second mode may be, for example, orthogonal fundamental (first order) modes. Two independent RF signals can thus be communicated simultaneously via the antenna 1. As noted above, the 'backs' of the larger L-shaped parts 10d, 20d of the first and second land are arc shaped, whereas the 'bases' are straight. In some embodiments, both the 'back' and the 'base' of the L-shaped lands 10, 20 may be straight. However without wishing to be bound by theory, it is believed that coupling between these two independent RF signals may be reduced by the use of a curved (arc shaped) edge on the back of the L-shaped parts of the first and second lands 10, 10', 20, 20'.

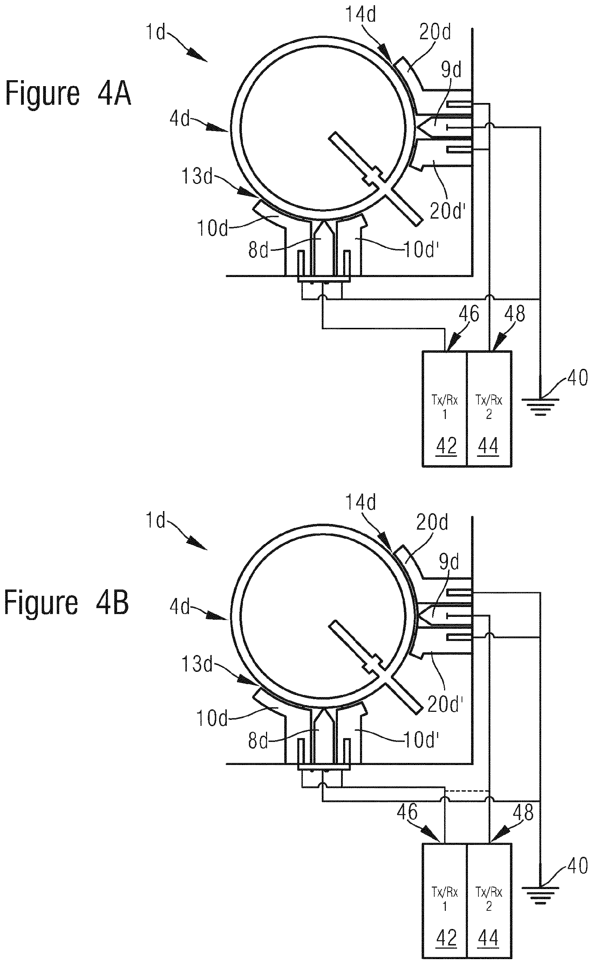

The system illustrated in Figure 4A comprises an antenna 1d such as that described above with reference to Figure 3, a ground connection, and two transmit/receive apparatuses, each being operable to transmit and receive RF electrical signals independently of the other. Each transmit/receive apparatus comprises an input/output signal connection for RF electrical signals.

In Figure 4A, the first stem 8d of the annular land 4d of the antenna 1d is connected to the input/output signal connection 46 of the first transmit/receive apparatus 42. At either side of this stem 8d, the two L-shaped parts 10d, 10d' of the first land are connected to ground 40.

The two L-shaped parts of the second land 20, 20d' are connected to the input/output signal connection 48 of the second transmit/receive apparatus 44. The second stem 9d of the annular land 4d is connected to ground 40.

In operation, the first transmit/receive apparatus 42 applies an RF signal to the annular land 4d via its first stem 8d to excite the waveguide provided by the first slot 13d. This drives a first polarisation of the fundamental harmonic mode of the antenna 1d. Similarly, the second transmit/receive apparatus 44 applies an RF signal to the second land 20d, 20d' to excite the waveguide provided by the second slot. As with the arrangement shown in Figure 4A, this can drive a second polarisation of the fundamental harmonic mode of the antenna 1d, orthogonal to the first polarisation.

Figure 4B illustrates a second signal connection arrangement for an antenna 1d.

The system illustrated in Figure 4B comprises an antenna 1d such as that described above with reference to Figure 3, a ground connection 40, and two transmit/receive apparatuses 42, 44, each being operable to transmit and receive RF electrical signals independently of the other. Each transmit/receive apparatus 42, 44 comprises an input/output signal connection 46, 48 for RF electrical signals.

In Figure 4B, the first stem 8d of the annular land 4d of the antenna 1d is connected to ground. At either side of this stem 8d, both parts of the first land 10d, 10d' are connected to input/output signal connection 46 of the first transmit/receive apparatus 42. The input/output signal connection 48 of the second transmit/receive apparatus 44 is connected to the second stem 9d of the annular land 4d. The two L-shaped parts of the second land 20d, 20d' are connected to ground 40.

In operation, the first transmit/receive apparatus 42 applies an RF signal to the first land 10d, 10d' to excite the waveguide provided by the first slot 13d. This drives a first polarisation of the fundamental harmonic mode of the antenna 1d. Similarly, the second transmit/receive apparatus 44 applies an RF signal to the annular land 4d via its stem 9d to excite the waveguide provided by the second slot 14d. The relative spatial arrangement of the first slot 13d and the second slot 14d (e.g. the two optionally being oriented transverse, e.g. orthogonal, to each other) may enable the antenna 1d to drive a second polarisation of the fundamental harmonic mode of the antenna 1d, orthogonal to the first polarisation.

The transmit/receive apparatus, Tx/Rx, 42, 44 illustrated in Figure 4A and Figure 4B may comprise any appropriate transceiver. For example typically such apparatus may comprise an impedance matching circuit for connection to the antenna 1d, a receive amplifier connected to the impedance matching circuit for amplifying received signals, and a demodulator for demodulating data carried by the signals. It may also comprise a modulator for encoding data onto an RF signal to be transmitted, and a transmit amplifier for boosting the power of modulated RF signals to be transmitted via the matching circuit to the antenna 1d.

It will be appreciated in the context of the present disclosure that although a multiple input multiple output communications apparatus comprising the antenna 1d has been described with reference to the antenna 1d of Figure 3, such an apparatus comprising the antennas 1, 1a, 1b, 1c described above with reference to Figures 1 and 2A-C may also be provided, and may be driven substantially as described above with reference to Figures 4A and 4B.

A decoupling stub, such as those described above with reference to Figures 2A-C and 3, may improve the decoupling between two ports of an antenna in comparison to an antenna without a stub, such as the antenna 1 described above with reference to Figure 1. The "double stub" 30b described with reference to Figure 2B may improve decoupling further in comparison to the stub 30a described with reference Figure 2A, and may improve the isolation between the two ports. The double-stub 30b may also improve impedance matching at the two ports.

A circular or other element on the stub, e.g. the circular element described with reference to Figure 2C may provide a reduction in the coupling between two ports that is more uniform across a range of operating frequencies.

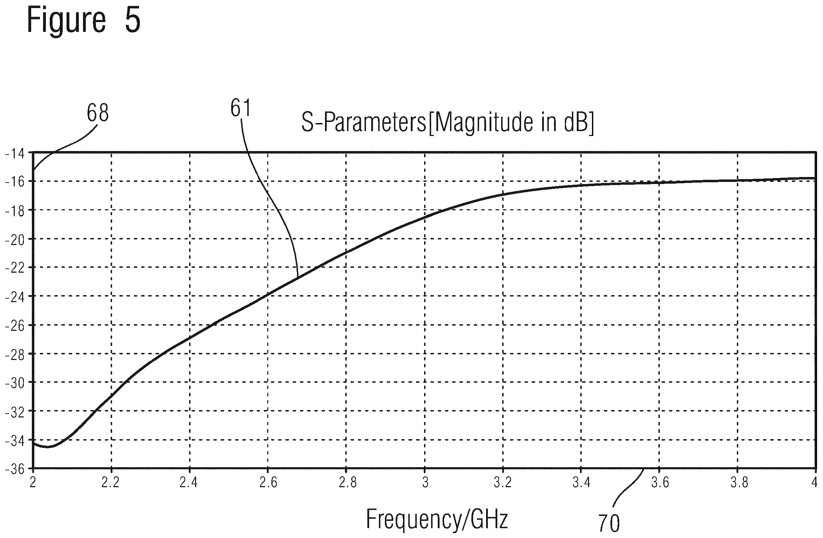

Figure 5 is a simulated plot of an S-parameter of the antenna 1 illustrated in Figure 1 over a frequency range from 2GHz to 4 GHz. The X-axis 70 of this plot indicates frequency, and the major increment between marks on this X-axis is 0.2GHz. The Y-axis 68 of this plot indicates the S-parameters magnitude in dB. The parameter S-12 is indicated on these axes by the line marked with reference numeral 61. The simulation of this parameter shown in Figure 5 has been generated assuming two ideal ports. It will be appreciated that in practice the two ports of the antenna 1 may be driven by a coaxial probe or a microstrip probe, the properties of which may alter the parameter S-12 shown in Figure 5.

It will be appreciated in the context of the present disclosure that S-parameters describe the input-output relationship between ports of an electrical system. In Figure 5 the parameter S-12 represents the power transferred from the second signal connection (Port 2) to the first signal connection (Port 1) of the antenna. For example, with reference to Figure 1, the first signal connection (Port 1) may be provided by the first stem 8 of the annular land 4 together with the first land 10, 10'. Likewise, the second signal connection (Port 2) may be provided by the second stem 9 of the annular land 4 together with the second land 20, 20'.

In Figure 5, the parameter S-12 rises gradually from about -34dB at 2GHz and levels off at around -18dB at around 3.6GHz, from where it remains relatively constant until 4GHz.

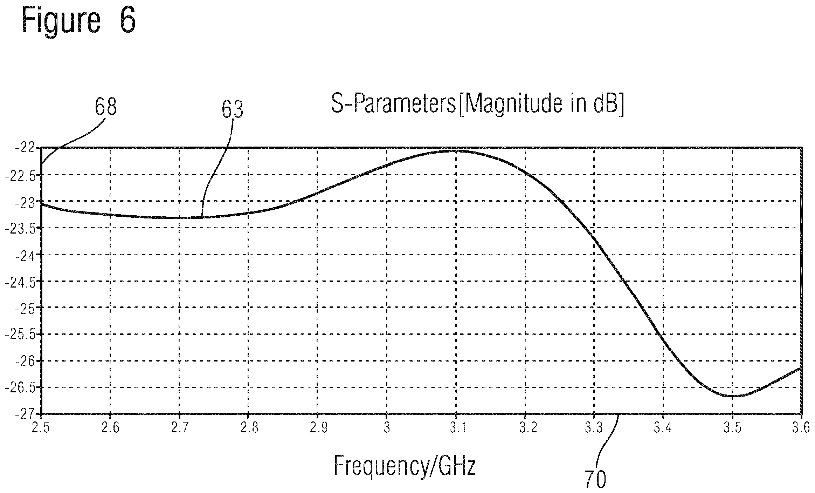

Figure 6 is a simulated plot of an S-parameter of the antenna 1a illustrated in Figure 2a over a frequency range of 2.5GHz to 4 GHz. The X-axis 70 of this plot indicates frequency, and the major increment between marks on this X-axis is 0.1GHz. The Y-axis 68 of this plot indicates the S-parameters magnitude in dB. The parameter S-12 is indicated on these axes by the line marked with reference numeral 63. The simulation of this parameter shown in Figure 6 has been generated assuming two ideal ports. It will be appreciated that in practice the two ports of the antenna 1 may be driven by a coaxial probe or a microstrip probe, the properties of which may alter the parameter S-12 shown in Figure 6.

It will be appreciated in the context of the present disclosure that S-parameters describe the input-output relationship between ports of an electrical system. In Figure 6 the parameter S-12 represents the power transferred from the second signal connection (Port 2) to the first signal connection (Port 1) of the antenna. For example, with reference to Figure 2a, the first signal connection (Port 1) may be provided by the first stem 8 of the annular land 4a together with the first land 10a, 10a'. Likewise, the second signal connection (Port 2) may be provided by the second stem 9 of the annulus together with the second land 20a, 20a'.

In Figure 6, the parameter S-12 drops slightly from -23dB at 2.5 GHz to a local minima of about -23.3dB at around 2.7GHz. It then rises to a maximum of about -22.1dB at about 3.1GHz and then drops to a minimum of about -26.6dB at about 3.5GHz. It then rises to about -26.1dB at 3.6GHz. As can be seen, in comparison to the plot shown in Figure 5, the inclusion of the stub in the antenna may reduce S-12 above 3GHz, thereby increasing the isolation of the ports.

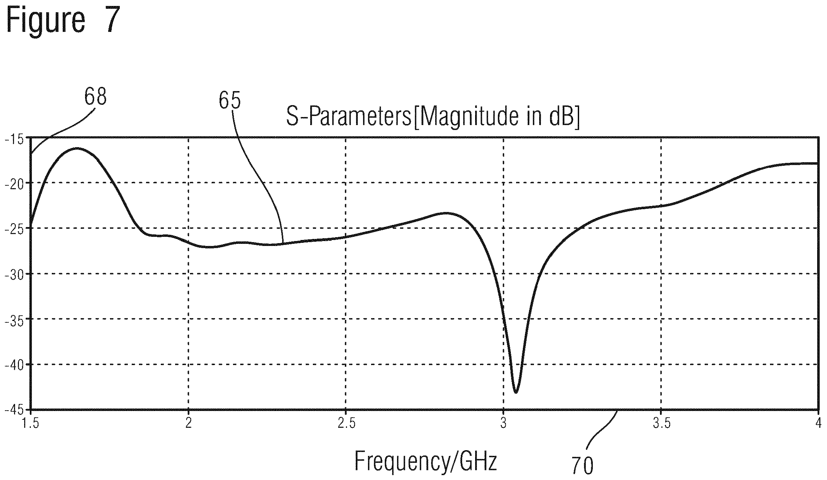

Figure 7 is a simulated plot of an S-parameter of the antenna 1b illustrated in Figure 2B over a frequency range of 1.5GHz to 4 GHz. The X-axis 70 of this plot indicates frequency, and the major increment between marks on this X-axis is 0.5GHz. The Y-axis 68 of this plot indicates the S-parameters magnitude in dB. The parameter S-12 is indicated on these axes by the line marked with reference numeral 65. The simulation of this parameter shown in Figure 7 has been generated assuming two ideal ports. It will be appreciated that in practice the two ports of the antenna 1 may be driven by a coaxial probe or a microstrip probe, the properties of which may alter the parameter S-12 shown in Figure 7.

It will be appreciated in the context of the present disclosure that S-parameters describe the input-output relationship between ports of an electrical system. In Figure 7 the parameter S-12 represents the power transferred from the second signal connection (Port 2) to the first signal connection (Port 1) of the antenna. For example, with reference to Figure 2B, the first signal connection (Port 1) may be provided by the first stem 8 of the annular land 4b together with the first land 10a, 10a'. Likewise, the second signal connection (Port 2) may be provided by the second stem 9 of the annular land 4b together with the second land 20a, 20a'.

In Figure 7, the parameter S-12 rises from -25dB at 1.5 GHz to a local maximum of about -16dB at around 1.65GHz. It then drops to around -26dB at around 1.8GHz. It then remains relatively constant, with some undulation, in the range 1.8GHz to 2.5GHz, where it rises to about -23GHz at about 2.8GHz. It then drops sharply to a minimum of about -43dB at around 3.05GHz, and then rises sharply to about -25dB at about 3.25GHz. It then continues to rise less sharply, with some undulation, to about -17.5dB at 4GHz. As can be seen, in comparison to the plots shown in Figure 5 and 6, the inclusion of the double stub in the antenna may further reduce S-12 above 3GHz, thereby further increasing the isolation of the ports.

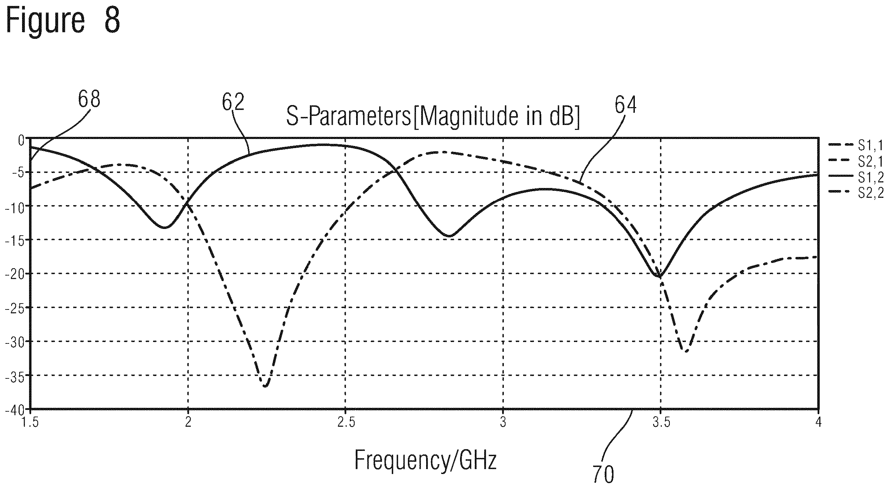

Figure 8 is an simulated plot of the S-parameters of the antenna 1d illustrated in Figure 3 over a frequency range of 1.5GHz to 4GHz. The X-axis 70 of this plot indicates frequency, and the major increment between marks on this X-axis is 0.5GHz. The Y-axis 68 of this plot indicates the S-parameters magnitude in dB. The parameter S-22 is indicated on these axes by the line marked with reference numeral 62. The parameter S-12 is indicated on these axes by the line marked with reference numeral 64. In contrast to the plots shown in Figures 4, 5 and 6, the simulation used to produce the S-parameters shown in Figure 8 was generated by additional simulating the properties of a coaxial probe used to drive the ports of the antenna 1d.

It will be appreciated in the context of the present disclosure that S-parameters describe the input-output relationship between ports of an electrical system. In Figure 8 the parameter S-12 represents the power transferred from the second signal connection (Port 2) to the first signal connection (Port 1) of the antenna. For example, with reference to Figure 3, the first signal connection (Port 1) may be provided by the first stem 8d of the annular land 4d together with the first land 10d, 10d'. Likewise, the second signal connection (Port 2) may be provided by the second stem 9d of the annulus together with the second land 20d, 20d'. The parameter S-22 represents how much power is reflected by the antenna 1d at the second signal connection. This parameter is thus often referred to as the reflection coefficient or return loss of the antenna 1d.

It will be appreciated that, as the antenna is symmetrical about the line that bisects the annulus between Port 1 and Port 2, the parameters S-11 and S-21 (not shown) substantially match the profile of parameters s-22 and s-12 respectively.

The parameter S-22 drops from about -1dB to -13dB in the range from 1.5GHz to about 1.9GHz. It then rises to about -2dB at about 2.2GHz where it remains relatively constant before falling from about 2.6GHz to a local minima of about -14dB at about 2.8GHz. It then rises to a local maxima of about -7dB at about 3.2GHz before falling to a local minima of about -20dB at around 3.5GHz. It then rises sharply but levels off at around -5dB at 4GHz.

The parameter S-12 rises from about -7dB at 1.5GHz to a local maxima of about -4dB at about 1.8 GHz. It then drops sharply down to about -37dB at about 2.2GHz before rising sharply again to about -2dB at 2.8GHz. It then drops gradually to about -7dB at around 3.3GHz, and then sharply to a local minima of about -31dB at around 3.6GHz. It then rises sharply but levels off at around -17dB at 4GHz.

Figures 5 to 8 give just one example each of the antenna performance which can be achieved for their respective antennas according to the principles of the present disclosure.

It will be appreciated that although the antennas are described as laying on the surface of a substrate, in some examples the antennas can be operated in free space.

Although in the examples described above the stub is either provided inside the annulus or both inside and outside the annulus, in some examples the stub may only be positioned outside of the annulus. For example, the stub may extend radially outwards from the annulus, from a first end connected to annulus to a second end outside the annulus.

In some examples the stub may be positioned on the other side of the annulus to the examples described above. For example the stub may be positioned at a point on the annulus equidistant between the first stem and the second stem, such that the angle between the stub and both the first and second stems is approximately 135°.

In other examples the stub may not extend from a point on the annulus that is equidistant between the first and second stems, such that the stub is closer to one of the stems than the other.

It will be understood that the lengths of the stubs described and shown are only exemplary, and that the length of the stub into and out from the annulus may vary in different examples. For example the length of the stub extending towards the centre of the annulus may differ from the length of the stub extending outwards from the annulus.

It will be understood that the position of the protuberances on the stub shown in Figure 3 is merely exemplary. In other examples the protuberances may extend from other points on the stub, for example points on the first part of the stub outside of the annulus.

The protuberances may be shapes other than rectangular in other examples. In some examples the stub may only comprises 1 protuberance. In other examples the stub may comprise greater than 2 protuberances.

It will be understood that the circular element on the stub shown in Figure 2C is merely exemplary. The element may be other shapes, e.g. oval-shaped or rectangular. In some examples a circular or other shaped element may be provided on the stub outside of the annulus. For example where an end of the stub is outside of the annulus, such as the example shown in Figure 2B, the element may be provided at that end. In some examples, more than one such element may be provided on a stub.

In some examples the antenna more than one stub, which may further decouple the two ports. For example the stubs may be spaced evenly around the circumference of the annulus such that the symmetry of the antenna is maintained.

In some examples the two ports may be driven at different frequencies to one another. In this case the antenna may act as a wideband antenna rather than a MIMO antenna. One set of frequencies may be radiated through one port and another set of frequencies may be radiated through the other port, at orthogonal polarisations to one another. Retuning of the antenna, e.g. adjusting the dimension of the antenna, may be required based on the coupling between the two ports. In this example the lengths of the first land and the second land may differ from one another, for example to account for the different frequencies applied to the first and second ports.

Any feature of any one of the examples disclosed herein may be combined with any selected features of any of the other examples described herein. For example, features of methods may be implemented in suitably configured hardware, and the configuration of the specific hardware described herein may be employed in methods implemented using other hardware. [Insert here pg. 31a-31d]

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. The invention is defined in the accompanying claims.

An aspect of the invention provides an antenna comprising:
a planar dielectric substrate;
a conductive annulus on a first surface of the substrate;
a first conductive land on the first surface, wherein the first land is outside the annulus and wherein an edge of the first land adjacent to the outward edge of a first portion of the annulus is spaced from the outward edge of the annulus to provide a first slot therebetween, wherein the first slot provides a first port of the antenna;
a second conductive land on the first surface wherein the second land is outside the annulus and wherein an edge of the second land adjacent to the outward edge of a second portion of the annulus is spaced from the outward edge of the annulus to provide a second slot therebetween, wherein the second slot provides a second port of the antenna;
a decoupling stub on the first surface and connected to the annulus to decouple the first port from the second port.

The decoupling stub may comprise at least one of: a first part connected to, and protruding radially outward from, the outward edge of the annulus; and a second part connected to, and protruding radially inwards from, an inward edge of the annulus. For example the stub may comprise at least one protuberance on the surface connected to and transverse to the stub.

In an embodiment the first conductive land comprises a first arc shaped land. For example the first conductive land may further comprise a first stem disposed on the first surface and connected to the outward edge of the annulus. For example at least one edge of the first stem may lie adjacent to and parallel to an edge of the first land. For example the first land may comprise a first part and a second part separated from the first part by the first stem.

In an embodiment the second conductive land comprises a second arc shaped land.

In an embodiment the antenna comprises a second stem disposed on the first surface and connected to the outward edge of the annulus. For example, at least one edge of the second stem may lie adjacent to and parallel to an edge of the second land. For example the second land may comprise a first part and a second part separated from the first part by the second stem.

In an embodiment the angular separation about the circumference of the annulus between the first stem and the second stem is 90°. The decoupling stub may be connected to the annulus between the first portion and the second portion, for example wherein the stub is equidistant from the first stem and the second stem, for example wherein the angular separation about the circumference of the annulus between the stub and the first stem is one of 45° and 135°.

In an embodiment at least one of the first stem and the second stem comprises a tapered portion arranged so that the spacing between the stem and the adjacent land gets wider towards the annulus.

In an embodiment the antenna comprises a first signal connection connected to the first land, and a second signal connection connected to the second stem,
wherein the first stem is grounded and the second land is grounded.

In an embodiment the first land has a first length and the second land has a second length different from the first length.

In an embodiment the first slot has a first length and the second slot has a second length different to the first length.

In an embodiment there is provided a transceiver apparatus comprising the inventive antenna, and
a first transmit/receive apparatus connected to the first land for exciting the first slot; and
a second transmit/receive apparatus connected to the annulus for exciting the second slot;
wherein the first transmit/receive apparatus is configured to provide a first input/output channel, and the second transmit/receive apparatus is configured to provide second input/output channel. For example the second transmit/receive apparatus may be connected to the annulus by the second stem. For example the first stem may be grounded.

An aspect provides a method of operating this transceiver apparatus. The method comprises:
operating the first transmit/receive apparatus to provide a first input/output channel using a first polarisation mode of the antenna;
operating the second transmit/receive apparatus to provide a second input/output channel using a second polarisation mode of the antenna.

An aspect provides a method of operating the inventive antenna apparatus; the method comprising:
providing a first input/output channel in a first frequency range at the first port using a first polarisation mode of the antenna;
providing a second input/output channel in a second frequency range at the second port using a second polarisation mode of the antenna;
wherein the first polarisation mode is orthogonal to the second polarisation mode.

In an embodiment this method comprises:
providing a first input/output channel comprises at least one of receiving and transmitting a signal in the first frequency range; and
providing a second input output channel comprises at least one of receiving and transmitting a signal in the second frequency range.

## Claims

1. An antenna (1a) comprising:
a planar dielectric substrate (3);
a conductive annulus (2) on a first surface of the substrate;
a first conductive land (10a) on the first surface, wherein the first land is outside the annulus and wherein an edge of the first land adjacent to the outward edge of a first portion of the annulus is spaced from the outward edge of the annulus to provide a first slot (13) therebetween, wherein the first slot provides a first port of the antenna;
a second conductive land (20a) on the first surface wherein the second land is outside the annulus and wherein an edge of the second land adjacent to the outward edge of a second portion of the annulus is spaced from the outward edge of the annulus to provide a second slot (14) therebetween, wherein the second slot provides a second port of the antenna;
a decoupling stub (30a) on the first surface and connected to the annulus to decouple the first port from the second port.

2. The antenna of claim 1 wherein the decoupling stub comprises at least one of: a first part connected to, and protruding radially outward from, the outward edge of the annulus; and a second part connected to, and protruding radially inwards from, an inward edge of the annulus.

3. The antenna of any preceding claim wherein the first conductive land comprises a first arc shaped land.

4. The antenna of claim 3 wherein the second conductive land comprises a second arc shaped land.

5. The antenna of claim 3 or 4 comprising a second stem disposed on the first surface and connected to the outward edge of the annulus.

6. The antenna of claim 5 wherein the angular separation about the circumference of the annulus between the first stem and the second stem is 90°.

7. The antenna of claim 5 or 6 wherein the decoupling stub is connected to the annulus between the first portion and the second portion.

8. The antenna of claim 5, 6 or 7 as dependent on claim 3 or any claim dependent thereon, wherein at least one of the first stem and the second stem comprises a tapered portion arranged so that the spacing between the stem and the adjacent land gets wider towards the annulus.

9. The antenna of claim 5 or any preceding claim dependent thereon comprising a first signal connection connected to the first land, and a second signal connection connected to the second stem,
wherein the first stem is grounded and the second land is grounded.

10. The antenna of any preceding claim, wherein the first land has a first length and the second land has a second length different from the first length.

11. The antenna of any preceding claim, wherein the first slot has a first length and the second slot has a second length different to the first length.

12. A transceiver apparatus comprising:
the antenna of any preceding claim,
a first transmit/receive apparatus connected to the first land for exciting the first slot; and
a second transmit/receive apparatus connected to the annulus for exciting the second slot;
wherein the first transmit/receive apparatus is configured to provide a first input/output channel, and the second transmit/receive apparatus is configured to provide second input/output channel.

13. A method of operating the apparatus of claim 12, the method comprising:
operating the first transmit/receive apparatus to provide a first input/output channel using a first polarisation mode of the antenna;
operating the second transmit/receive apparatus to provide a second input/output channel using a second polarisation mode of the antenna.

14. A method of operating the antenna of any of claims 1 to 11; the method comprising:
providing a first input/output channel in a first frequency range at the first port using a first polarisation mode of the antenna;
providing a second input/output channel in a second frequency range at the second port using a second polarisation mode of the antenna;
wherein the first polarisation mode is orthogonal to the second polarisation mode.

15. The method of claim 14 wherein:
providing a first input/output channel comprises at least one of receiving and transmitting a signal in the first frequency range; and
providing a second input output channel comprises at least one of receiving and transmitting a signal in the second frequency range.

## Patentansprüche

1. Antenne (1a), die Folgendes umfasst:
ein ebenes dielektrisches Substrat (3);
einen leitenden Ring (2) auf einer ersten Oberfläche des Substrats;
einen ersten leitenden Steg (10a) auf der ersten Oberfläche, wobei der erste Steg außerhalb des Rings liegt und wobei eine Kante des ersten Stegs neben der Außenkante eines ersten Abschnitts des Rings von der Außenkante des Rings beabstandet ist, um einen ersten Schlitz (13) dazwischen zu bilden, wobei der erste Schlitz einen ersten Anschluss der Antenne bereitstellt;
einen zweiten leitenden Steg (20a) auf der ersten Oberfläche, wobei der zweite Steg außerhalb des Rings liegt und wobei eine Kante des zweiten Stegs neben der Außenkante eines zweiten Abschnitts des Rings von der Außenkante des Rings beabstandet ist, um einen zweiten Schlitz (14) dazwischen zu bilden, wobei der zweite Schlitz einen zweiten Anschluss der Antenne bereitstellt;
einen Entkopplungszapfen (30a) auf der ersten Oberfläche, der mit dem Ring verbunden ist, um den ersten Anschluss vom zweiten Anschluss zu entkoppeln.

2. Antenne nach Anspruch 1, wobei der Entkopplungszapfen einen ersten Teil, der mit der Außenkante des Rings verbunden ist und von dieser radial nach außen vorsteht; und/oder einen zweiten Teil umfasst, der mit einer Innenkante des Rings verbunden ist und von dieser radial nach innen vorsteht.

3. Antenne nach einem vorherigen Anspruch, wobei der erste leitende Steg einen ersten bogenförmigen Steg umfasst.

4. Antenne nach Anspruch 3, wobei der zweite leitende Steg einen zweiten bogenförmigen Steg umfasst.

5. Antenne nach Anspruch 3 oder 4, die einen zweiten Steg umfasst, der auf der ersten Oberfläche angeordnet und mit der Außenkante des Rings verbunden ist.

6. Antenne nach Anspruch 5, wobei der Winkelabstand um den Umfang des Rings zwischen dem ersten Schaft und dem zweiten Schaft 90° beträgt.

7. Antenne nach Anspruch 5 oder 6, wobei der Entkopplungszapfen mit dem Ring zwischen dem ersten Abschnitt und dem zweiten Abschnitt verbunden ist.

8. Antenne nach Anspruch 5, 6 oder 7 in Abhängigkeit von Anspruch 3 oder einem davon abhängigen Anspruch, wobei der erste und/oder der zweite Schaft einen konischen Abschnitt aufweist/-en, der so ausgelegt ist, dass der Abstand zwischen dem Schaft und dem benachbarten Steg zum Ring hin größer wird.

9. Antenne nach Anspruch 5 oder einem davon abhängigen vorherigen Anspruch, die eine mit dem ersten Steg verbundene erste Signalverbindung und eine mit dem zweiten Steg verbundene zweite Signalverbindung umfasst,
wobei der erste Steg geerdet ist und der zweite Steg geerdet ist.

10. Antenne nach einem vorherigen Anspruch, wobei der erste Steg eine erste Länge und der zweite Steg eine sich von der ersten Länge unterscheidende zweite Länge hat.

11. Antenne nach einem vorherigen Anspruch, wobei der erste Schlitz eine erste Länge und der zweite Schlitz eine sich von der ersten Länge unterscheidende zweite Länge hat.

12. Transceivervorrichtung, die Folgendes umfasst:
die Antenne nach einem vorherigen Anspruch,
eine erste Sende-/Empfangsvorrichtung, die mit dem ersten Steg verbunden ist, um den ersten Schlitz anzuregen; und
eine zweite Sende-/Empfangsvorrichtung, die mit dem Ring verbunden ist, um den zweiten Schlitz anzuregen;
wobei die erste Sende-/Empfangsvorrichtung zum Bereitstellen eines ersten Ein-/Ausgangskanals konfiguriert ist und die zweite Sende-/Empfangsvorrichtung zum Bereitstellen eines zweiten Ein-/Ausgangskanals konfiguriert ist.

13. Verfahren zum Betreiben der Vorrichtung nach Anspruch 12, wobei das Verfahren Folgendes beinhaltet:
Betreiben der ersten Sende-/Empfangsvorrichtung, um einen ersten Ein-/Ausgangskanal unter Verwendung eines ersten Polarisationsmodus der Antenne bereitzustellen;
Betreiben der zweiten Sende-/Empfangsvorrichtung, um einen zweiten Ein-/Ausgangskanal unter Verwendung eines zweiten Polarisationsmodus der Antenne bereitzustellen.

14. Verfahren zum Betreiben der Antenne nach einem der Ansprüche 1 bis 11, wobei das Verfahren Folgendes beinhaltet:
Bereitstellen eines ersten Ein-/Ausgangskanals in einem ersten Frequenzbereich am ersten Anschluss unter Verwendung eines ersten Polarisationsmodus der Antenne;
Bereitstellen eines zweiten Ein-/Ausgangskanals in einem zweiten Frequenzbereich am zweiten Anschluss unter Verwendung eines zweiten Polarisationsmodus der Antenne;
wobei der erste Polarisationsmodus orthogonal zum zweiten Polarisationsmodus ist.

15. Verfahren nach Anspruch 14, wobei:
das Bereitstellen eines ersten Ein-/Ausgangskanals das Empfangen und/oder Senden eines Signals im ersten Frequenzbereich beinhaltet; und
das Bereitstellen eines zweiten Ein-/Ausgangskanals das Empfangen und/oder Senden eines Signals im ersten Frequenzbereich beinhaltet.

## Revendications

1. Antenne (la) comprenant:
un substrat diélectrique plan (3);
un anneau conducteur (2) sur une première surface du substrat;
une première plage conductrice (10a) sur la première surface, la première plage se trouvant à l'extérieur de l'anneau et un bord de la première plage adjacent au bord dirigé vers l'extérieur d'une première portion de l'anneau étant espacé par rapport au bord dirigé vers l'extérieur de l'anneau afin de fournir une première fente (13) entre eux, la première fente fournissant un premier port de l'antenne;
une deuxième plage conductrice (20a) sur la première surface, la deuxième plage se trouvant à l'extérieur de l'anneau et un bord de la deuxième plage adjacent au bord dirigé vers l'extérieur d'une deuxième portion de l'anneau étant espacé par rapport au bord dirigé vers l'extérieur de l'anneau afin de fournir une deuxième fente (14) entre eux, la deuxième fente fournissant un deuxième port de l'antenne;
un ergot de découplage (30a) sur la première surface et raccordé à l'anneau afin de découpler le premier port du deuxième port.

2. Antenne de la revendication 1 dans laquelle l'ergot de découplage comprend au moins une partie parmi: une première partie raccordée à, et faisant saillie radialement vers l'extérieur hors du bord dirigé vers l'extérieur de l'anneau; et une deuxième partie raccordée à, et faisant saillie radialement vers l'intérieur hors d'un bord dirigé vers l'intérieur de l'anneau.

3. Antenne de n'importe quelle revendication précédente dans laquelle la première plage conductrice comprend une première plage en forme d'arc.

4. Antenne de la revendication 3 dans laquelle la deuxième plage conductrice comprend une deuxième plage en forme d'arc.

5. Antenne de la revendication 3 ou 4 comprenant une deuxième tige disposée sur la première surface et raccordée au bord dirigé vers l'extérieur de l'anneau.

6. Antenne de la revendication 5 dans laquelle la séparation angulaire autour de la circonférence de l'anneau entre la première tige et la deuxième tige est de 90°.

7. Antenne de la revendication 5 ou 6 dans laquelle l'ergot de découplage est raccordé à l'anneau entre la première portion et la deuxième portion.

8. Antenne de la revendication 5, 6 ou 7 telle que dépendante de la revendication 3 ou de n'importe quelle revendication dépendante de celle-ci, dans laquelle au moins une tige parmi la première tige et la deuxième tige comprend une portion effilée agencée de sorte que l'espacement entre la tige et la plage adjacente devienne plus large vers l'anneau.

9. Antenne de la revendication 5 ou de n'importe quelle revendication précédente dépendante de celle-ci comprenant une première connexion de signal connectée à la première plage, et une deuxième connexion de signal connectée à la deuxième tige,
dans laquelle la première tige est mise à la terre et la deuxième plage est mise à la terre.

10. Antenne de n'importe quelle revendication précédente, dans laquelle la première plage a une première longueur et la deuxième plage a une deuxième longueur qui est différente de la première longueur.

11. Antenne de n'importe quelle revendication précédente, dans laquelle la première fente a une première longueur et la deuxième fente a une deuxième longueur qui est différente de la première longueur.

12. Appareil émetteur-récepteur comprenant:
l'antenne de n'importe quelle revendication précédente,
un premier appareil d'émission/réception connecté à la première plage pour exciter la première fente; et
un deuxième appareil d'émission/réception connecté à l'anneau pour exciter la deuxième fente;
dans lequel le premier appareil d'émission/réception est configuré pour fournir un premier canal d'entrée/sortie, et le deuxième appareil d'émission/réception est configuré pour fournir un deuxième canal d'entrée/sortie.

13. Procédé destiné à faire fonctionner l'appareil de la revendication 12, le procédé comprenant:
le fonctionnement du premier appareil d'émission/réception afin de fournir un premier canal d'entrée/sortie grâce à l'utilisation d'un premier mode de polarisation de l'antenne;
le fonctionnement du deuxième appareil d'émission/réception afin de fournir un deuxième canal d'entrée/sortie grâce à l'utilisation d'un deuxième mode de polarisation de l'antenne.

14. Procédé destiné à faire fonctionner l'antenne de n'importe lesquelles des revendications 1 à 11;
le procédé comprenant:
la fourniture d'un premier canal d'entrée/sortie dans une première gamme de fréquences au niveau du premier port grâce à l'utilisation d'un premier mode de polarisation de l'antenne;
la fourniture d'un deuxième canal d'entrée/sortie dans une deuxième gamme de fréquences au niveau du deuxième port grâce à l'utilisation d'un deuxième mode de polarisation de l'antenne;
dans lequel le premier mode de polarisation est orthogonal par rapport au deuxième mode de polarisation.

15. Procédé de la revendication 14 dans lequel:
la fourniture d'un premier canal d'entrée/sortie comprend au moins une action parmi la réception et l'émission d'un signal dans la première gamme de fréquences; et
la fourniture d'un deuxième canal d'entrée/sortie comprend au moins une action parmi la réception et l'émission d'un signal dans la deuxième gamme de fréquences.
